(19) **Europäisches Patentamt / European Patent Office / Office européen des brevets**

(11) **EP 1 792 416 B1**

(12) **FASCICULE DE BREVET EUROPEEN**

(45) Date de publication et mention
de la délivrance du brevet:
**02.01.2008 Bulletin 2008/01**

(21) Numéro de dépôt: **05786295.5**

(22) Date de dépôt: **08.09.2005**

(51) Int Cl.:
*H04B 7/005* (2006.01)    *H04Q 7/38* (2006.01)

(86) Numéro de dépôt international:
**PCT/EP2005/009664**

(87) Numéro de publication internationale:
**WO 2006/029756 (23.03.2006 Gazette 2006/12)**

(54) **PROCEDE ET DISPOSITIF DE CONTROLE DE LA PUISSANCE D"EMISSION D"UN TERMINAL MOBILE DANS UN SYSTEME RADIO CELLULAIRE, ET TERMINAL ADAPTE A LA MISE EN OEUVRE DU PROCEDE**

VERFAHREN ZUR STEUERUNG DER SENDELEISTUNG EINES MOBILEN ENDGERÄTS IN EINEM ZELLULAREN FUNKSYSTEM UND ENDGERÄT ZUR DURCHFÜHRUNG BESAGTEN VERFAHRENS

METHOD FOR CONTROLLING THE TRANSMISSION POWER OF A MOBILE TERMINAL IN A CELLULAR RADIO SYSTEM AND A TERMINAL FOR CARRYING OUT SAID METHOD

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **09.09.2004 FR 0409578**

(43) Date de publication de la demande:
**06.06.2007 Bulletin 2007/23**

(73) Titulaire: **Nortel Networks Limited**
**St Laurent, Québec H4S 2A9 (CA)**

(72) Inventeurs:
• **CHOUKROUN, David**
**F-78150 Le Chesnay (FR)**

• **GRUET, Christophe**
**F-78990 Elancourt (FR)**
• **GEORGEAUX, Eric**
**F-78180 Montigny Le Bretonneux (FR)**
• **BOUMENDIL, Sarah**
**F-75016 Paris (FR)**

(74) Mandataire: **Ameline, Jean-Paul B.C.**
**Alcatel-Lucent**
**Intellectual Property & Standards**
**54, rue La Boétie**
**75008 Paris (FR)**

(56) Documents cités:
**EP-A- 1 303 158          WO-A-03/094541**
**WO-A-03/096570**

Printed by Jouve, 75001 PARIS (FR)

## Description

La présente invention est relative aux systèmes cellulaires de radiocommunication et plus précisément au transfert intercellulaire d'un lien radio établi entre un terminal et un réseau d'accès.

Dans de tels systèmes cellulaires, il est prévu un processus faisant en sorte qu'un terminal mobile puisse changer de canal radio en maintenant une communication en cours. Un tel processus de transfert de canal est couramment appelé "handover".

On distingue le handover intercellulaire, qui intervient lors d'un déplacement du terminal qui l'amène à changer de cellule au sein du réseau d'accès, et le handover intracellulaire dans lequel le nouveau canal relève de la même cellule que l'ancien.

On distingue d'autre part le handover en douceur ou "soft handover" (SHO), dans lequel des liens radio multiples sont établis simultanément entre le terminal et plusieurs cellules voisines pendant un certain temps, ce qui assure une continuité de communication ainsi qu'une diversité de réception dans la phase transitoire, et le handover brutal ou "hard handover" (HHO) dans lequel la communication sur le premier canal est rompue au moment ou le terminal bascule sur le second canal. Un cas particulier de SHO est celui du "softer handover" (SerHO) dans lequel les cellules concernées par les liens radio multiples en SHO sont définies par une station de base commune. De telles cellules correspondent par exemple à des secteurs d'une station de base multisectorielle.

Des mécanismes de SHO et SerHO sont notamment prévus dans les réseaux UMTS ("Universal Mobile Télécommunications System")

Des mécanismes de HHO sont notamment prévus dans les réseaux GSM ("Global System for Mobile communications") et UMTS. Un HHO peut aussi intervenir entre un réseau d'accès de type GSM et un réseau d'accès de type UMTS ou vice-versa. C'est alors un handover entre deux technologies d'accès différentes ou "inter-RAT" ("inter-Radio Access Technology").

Un transfert de cellule est généralement initié sur la base de critères prédéterminés relatifs à la qualité de la transmission sur le lien radio entre le terminal et le réseau d'accès. Afin de contrôler qu'un lien radio vérifie des critères de qualité requis, différentes mesures sont effectuées relativement à la cellule du lien radio, au lien radio lui-même, ou encore à une ou plusieurs cellules voisines. Dans les systèmes GSM, respectivement UMTS, un organe de contrôle appelé BSC ("base station controller"), respectivement RNC ("radio network controller"), est en charge d'initier des handovers lorsque les critères requis sont remplis. Un handover peut aussi être amorcé en fonction de critères d'ingénierie réseau adoptés par l'opérateur. Par exemple, des handovers intracellulaires peuvent être amorcés dans le cadre de reconfigurations de liens radio servant à optimiser l'usage des ressources disponibles dans une cellule Des handovers inter-RAT peuvent aussi être décidés pour orienter préférentiellement tel type de communication vers tel type de réseau d'accès radio (par exemple communication de phonie sur un réseau GSM) et tel autre type de communication vers tel autre type de réseau d'accès (par exemple communication de données vers un réseau UMTS).

Un service de communication mobile de qualité repose notamment sur la performance de la procédure de handover qui doit être transparente pour un abonné en communication. Le plus critique des handovers précités est le HHO au cours duquel la communication établie entre le terminal et le réseau est momentanément interrompue.

Afin de limiter le temps d'interruption de la communication pendant un HHO, sur réception d'une commande de handover, le terminal démarre généralement un temporisateur et tente de poursuivre la communication sur le second canal radio. Puis, dans le cas où, après expiration du temporisateur, la communication n'a pas pu se poursuivre sur le second canal radio, le terminal essaie de retourner vers le ou les canaux radio précédemment en vigueur.

Un problème qui se pose alors est celui de la puissance à laquelle le terminal devra recommencer à émettre sur l'interface radio en revenant sur le ou les anciens canaux. En général, la puissance d'émission des terminaux est contrôlée par le réseau au moyen d'une boucle de rétroaction. Le niveau de signal reçu du terminal et/ou la qualité de ce signal sont évalués par le réseau qui lui adresse en conséquence des instructions d'augmenter ou de diminuer sa puissance d'émission. Mais dans la phase du HHO où le terminal a cessé d'émettre sur le ou les anciens canaux, cette boucle de rétroaction est interrompue, et lorsque le terminal revient si le HHO a échoué, il ne sait plus à quelle puissance émettre.

Ce problème se pose particulièrement dans les systèmes, tels l'UMTS, où le contrôle de puissance a une rapidité et une dynamique relativement importantes. Si le terminal recommence à émettre à une puissance insuffisante, il y a un risque de rupture définitive de la communication, perçue par l'utilisateur comme une discontinuité du service. Si le terminal recommence à émettre à une puissance excessive, il provoque un interférence indésirable pour les communications en cours d'autres utilisateurs.

Le document WO03/094541 décrit un procédé dans lequel, après resinchronisation, le feedback loop, perdu pendant le handover, est rétabli. Le réseau calcule des changements de propagation radio pour atteindre plus rapidement le point de travail optimal du feedback loop de puissance.

La présente invention à pour but de résoudre ou du moins de réduire l'incidence de ce problème en proposant un mécanisme simple permettant au système de radiocommunication cellulaire de rétablir rapidement et efficacement le lien radio initial après un échec de HHO.

Un premier aspect de la présente invention propose un procédé de contrôle de la puissance d'émission d'un terminal mobile en communication dans un système radio cellulaire, le terminal recevant des commandes d'asservissement de puissance depuis au moins une station de base du système cellulaire avec laquelle est établi un lien radio comprenant des premiers canaux dédiés montant et descendant, le procédé comprenant les étapes suivantes:

- en réponse à la réception par le terminal d'une commande de changement de canaux, mémoriser un premier niveau de puissance capté depuis ladite station de base et une puissance de référence à laquelle le terminal émettait sur le premier canal montant au moment de recevoir ladite commande, et tenter de poursuivre la communication sur de nouveaux canaux dédiés montant et descendant, le terminal cessant d'émettre sur le premier canal dédié montant;
- si la poursuite de la communication sur les nouveaux canaux échoue, estimer un second niveau de puissance capté depuis ladite station de base, et recommencer à émettre depuis le terminal sur le premier canal dédié montant avec un niveau de puissance déterminé en fonction de la puissance de référence mémorisée et d'une variation observée entre lesdits premier et second niveaux de puissance.

La présente invention couvre les différents types de HHO.

En général, dans un système cellulaire, une boucle de contrôle de puissance est créée entre le terminal et le réseau d'accès afin de permettre au terminal d'adapter sa puissance d'émission à la configuration de la cellule via laquelle, il est relié au réseau d'accès. Or, pendant un hard handover, une telle boucle de contrôle de puissance assurant une adéquation entre la puissance d'émission du terminal, la qualité de la communication et l'affaiblissement de propagation, ou "pathloss", est rompue. La présente invention permet avantageusement au terminal de déterminer une nouvelle puissance d'émission après un HHO qui a échoué afin de réduire l'effet de cette interruption de la boucle de contrôle de puissance

Une fois que la poursuite de la communication sur les nouveaux canaux a échoué, le terminal détermine la nouvelle puissance à laquelle il va émettre son premier message sur le premier canal dédié montant afin de rétablir la communication avec le réseau d'accès. Ce calcul prend en compte d'une part le niveau de puissance auquel le terminal émettait au moment de la réception de la commande de HHO et d'autre part une variation de niveau de puissance capté depuis la station de base entre le moment où la commande de HHO est reçu et le moment où le terminal revient sur son premier canal dédié montant après l'échec du HHO. Le terminal est alors en mesure d'émettre à nouveau à une puissance adaptée à la nouvelle configuration dans laquelle il se trouve après l'échec du hard handover. En effet, la puissance d'émission ainsi calculée peut être bien adaptée puisqu'elle prend en compte des changements qui ont pu se produire pendant la durée de la tentative du handover.

Lorsqu'un terminal émet un signal à une puissance trop faible, le réseau d'accès ne reçoit pas le signal émis. Si le terminal qui tente de rétablir la communication avec le réseau d'accès via le premier canal montant, émet un signal à une puissance trop faible, le temps d'interruption de la communication entre le terminal et le réseau d'accès est prolongé et la communication peut être définitivement perdue.

Ainsi, un calcul de la puissance d'émission selon un mode de réalisation de la présente invention évite au terminal d'émettre à une puissance d'émission trop faible et favorise de ce fait le rétablissement de la communication avec le réseau d'accès par le premier canal radio.

Inversement, lorsqu'un terminal émet à une puissance excessive dans une cellule donnée, il impacte négativement la capacité et la qualité des communications en cours dans la cellule en créant des interférences inutiles sur les autres liens radio. Un tel calcul de puissance peut permettre également d'éviter d'émettre à une puissance trop forte dans la première cellule.

La prise en compte du nouveau niveau de puissance capté depuis la station de base après l'échec du HHO dans le calcul de la nouvelle puissance d'émission peut s'avérer très avantageux notamment lorsque le terminal se déplace à grande vitesse. En effet, dans ce cas, les pertes de propagation entre le terminal et la station de base de la première cellule à laquelle il est relié peuvent avoir des variations significatives entre le moment où le terminal lance le HHO requis et l'instant où il tente de rétablir la communication par le premier canal dédié. On note en effet qu'en 500 ms, un terminal se déplaçant à 100 km/h parcourt une dizaine de mètres, ce qui peut entraîner de grandes variations de pathloss.

En général, dans un système cellulaire, un terminal mobile placé dans une zone de couverture d'une station de base reçoit un signal émis par la station de base sur un canal commun descendant.

Ainsi, le terminal mobile peut déterminer le premier et/ou le second niveau de puissance capté depuis la station de base à partir de la puissance de ce signal émis sur le canal commun descendant.

Le terminal mobile peut également déterminer le premier et/ou le second niveau de puissance capté depuis la station de base en calculant une énergie reçue depuis la station de base dans une bande de fréquence définie sur une période de temps donnée sur le canal commun descendant.

Le terminal peut être en cours de SHO et/ou SerHO quand il reçoit la commande de HHO. Dans une telle configuration, plusieurs liens radio sont établis entre le terminal mobile et une ou plusieurs stations de base au moment de la réception de la commande de changement de canaux. En général, un signal de balise ou signal pilote est diffusé par la ou les stations de base dans les différentes cellules concernées sur des canaux communs descendants respectifs Les terminaux qui reçoivent ce signal de balise déterminent un niveau de puissance reçu de la station de base.

Dans un tel cas, le terminal peut déterminer le premier niveau de puissance, à mémoriser avant la tentative de HHO, par une combinaison de tout ou partie des niveaux de puissance captés depuis lesdites stations de base. Si la poursuite de la communication sur les nouveaux canaux échoue, te terminal peut également estimer le second niveau de puissance en combinant tout ou partie des niveaux de puissance captés depuis les stations de base une fois que la poursuite de la communication sur les nouveaux canaux a échoué.

Ainsi, le terminal peut déterminer sa nouvelle puissance d'émission en tenant avantageusement compte des différents niveaux de puissance de signal reçu depuis chacune des stations de base avec laquelle est établi au moins un lien radio.

Le terminal mobile peut déterminer un niveau de puissance d'émission, une fois que la poursuite de la communication sur les nouveaux canaux a échoué, comme une somme entre la variation observée entre les premier et second niveaux de puissance, la puissance de référence mémorisée et une valeur de décalage de puissance positive ou nulle. La valeur de décalage de puissance peut être obtenue à partir d'informations de signalisation reçues depuis la station de base.

Il peut en outre prendre en compte un paramètre de configuration ou encore d'autres informations reçues depuis la station de base, telles que par exemple des informations indiquant un niveau d'interférence relatif à la communication avec la station de base.

Un second aspect de la présente invention propose un dispositif de contrôle de puissance d'émission d'un terminal mobile comprenant des moyens de traitement agencés pour la mise en oeuvre du procédé selon le premier aspect de l'invention.

Un troisième aspect de la présente invention propose un terminal mobile de radiocommunication, comprenant:

- des moyens de communication avec au moins une station de base d'un système radio cellulaire selon un lien radio comprenant des premiers canaux dédiés montant et descendant, les moyens de communication comprenant des moyens d'asservissement de la puissance d'émission sur le premier canal dédié montant en fonction de commandes d'asservissement de puissance reçues depuis ladite station de base;

- des moyens pour, en réponse à la réception par le terminal d'une commande de changement de canaux, mémoriser un premier niveau de puissance capté depuis ladite station de base et une puissance de référence à laquelle le terminal émettait sur le premier canal montant au moment de recevoir ladite commande et tenter de poursuivre la communication sur de nouveaux canaux dédiés montant et descendant, le terminal cessant d'émettre sur le premier canal dédié montant;

- des moyens pour, en cas d'échec de la poursuite de la communication sur les nouveaux canaux, estimer un second niveau de puissance capté depuis ladite station de base une fois que la poursuite de la communication sur les nouveaux canaux a échoué, et recommencer à émettre sur le premier canal dédié montant avec un niveau de puissance déterminé en fonction de la puissance de référence mémorisée et d'une variation observée entre lesdits premier et second niveaux de puissance.

D'autres aspects, buts et avantages de l'invention apparaîtront à la lecture de la description d'un de ses modes de réalisation, donnée ci-après en référence aux dessins annexés.

L'invention sera également mieux comprise à l'aide de la description qui suit, en référence aux dessins joints, sur lesquels :

- la figure 1 est un schéma synoptique d'un radiocommunication cellulaire mixte UMTS/GSM convenant pour la mise en oeuvre de l'invention; et

- la figure 2 illustre les principales étapes d'un mode de réalisation de la présente invention.

L'invention est décrite ci-après dans son application aux systèmes de troisième génération de type UMTS et plus précisément dans un cas de hard handover (HHO) entre différentes technologies d'accès. On remarquera que les caractéristiques de l'invention décrites dans les sections suivantes se transposent aisément à d'autres types de systèmes cellulaires, ainsi qu'à d'autres types de handover. Le système UMTS est normalisé dans les spécifications publiées par le "3rd Generation Partnership Project" (3GPP).

Les scénarios de handover dans un système UMTS sont décrits dans la spécification technique 3GPP TS 25.832, "Manifestations of Handover and SRNS Relocation (Release 4)", version 4.0.0, publiée en mars 2001. Les capacités de mesure d'un terminal UMTS sont définies dans la spécification technique 3G TS 25.215, "Physical layer - Measurements (FDD) (Release 5)", version 5.0.0, publiée en mars 2002.

Un terminal UMTS est capable de fournir différentes mesures relatives à chaque cellule avoisinante, notamment à partir d'un canal physique commun unidirectionnel depuis la station de base de la cellule, appelé CPICH ("Common Pilot Channel"). Ainsi, un terminal peut mesurer le niveau de puissance d'un signal reçu dans une cellule sur le canal CPICH de celle-ci. Cette mesure est notée CPICH_RSCP ("Received Signal Code Power"). Il peut également mesurer une énergie par chip reçue depuis la cellule rapportée à la puissance du bruit. Cette mesure est notée CPICH_Ec/$N_0$.

Ces mesures sont utilisées notamment dans les processus de sélection de cellule et de handover. Un terminal en communication avec une cellule ou un ensemble de cellules en SHO (ensemble actif ou "active set") mesure alors le rapport CPICH_Ec/$N_0$ et/ou le CPICH_RSCP pour un certain nombre de cellules voisines (ensemble surveillé ou "monitored set") qui lui sont désignées par l'infrastructure. De telles mesures permettent au procédures de contrôle de liens exécutées dans le réseau d'accès d'estimer un niveau de qualité pour chaque cellule à un instant donné et donc de sélectionner les cellules les plus appropriées pour servir le terminal

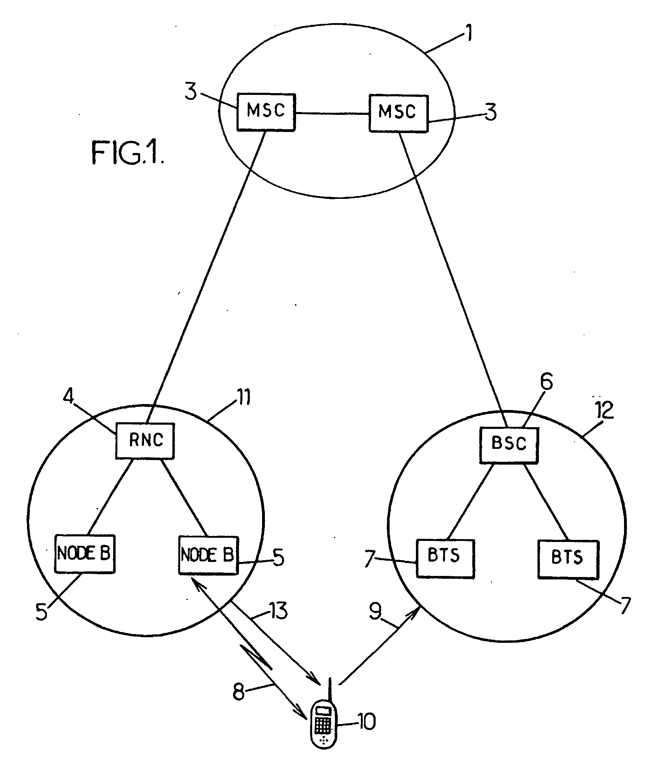

La figure 1 présente un réseau coeur 1 coopérant avec d'une part un réseau d'accès radio 11 de type UTRAN ("UMTS Terrestrian Radio Access Network") et d'autre part un réseau d'accès radio GSM 12. Le réseau coeur comprend des commutateurs interconnectés comprenant des commutateurs en mode circuit appelés MSC 3 ("Mobile Switching Center") de deuxième et de troisième générations et/ou des commutateurs en mode paquet appelés SGSN ("Serving GPRS Support Node") de deuxième et de troisième générations.

Le réseau d'accès UMTS 11 comprend des contrôleurs de réseau radio (RNC, "Radio Network Controller") reliés chacun à des stations de base respectives 5 appelées "node B". Le réseau d'accès GSM 12 comprend des contrôleurs de stations de base 6 (BSC, "Base Station Controller"), fonctionnellement comparables aux RNC, reliés chacun à des stations de base respectives 7 appelées BTS ("Base Transceiver Station").

Dans l'exemple représenté sur la figure 1, un terminal mobile bi-mode UMTS/GSM 10 est en communication via un lien radio bidirectionnel 8 qui est établi entre un terminal mobile 10 et le node B 5. Le lien radio comprend des canaux dédiés de trafic montant et descendant.

Dans l'exemple considéré, l'invention intervient dans un cas où le terminal mobile 10 reçoit une commande de HHO inter-RAT 13 via la station de base 5 requérant un changement de canaux depuis le réseau d'accès UMTS 11 vers le réseau d'accès GSM 12.

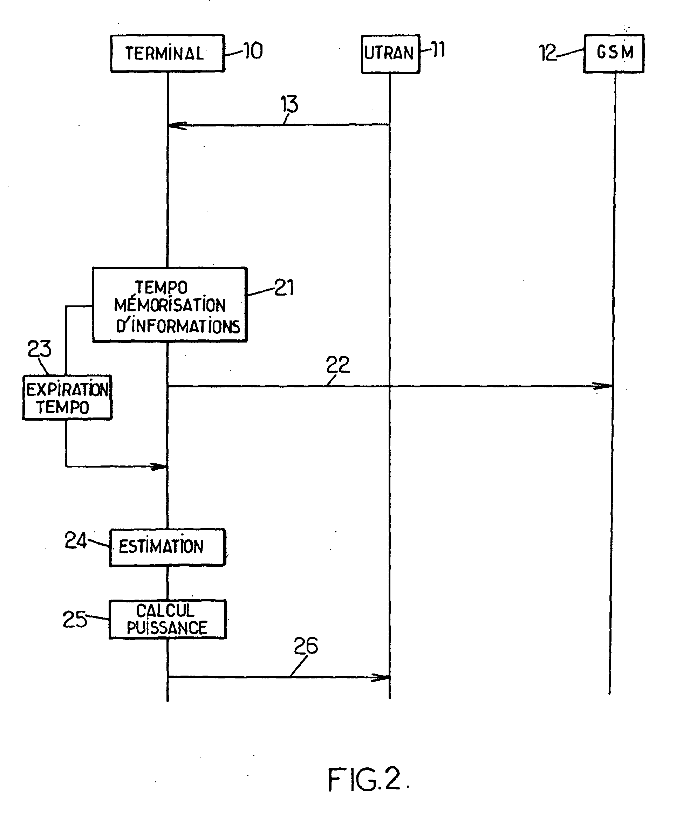

A réception de cette commande 13, le terminal réalise un certain nombre d'étapes qui seront détaillées dans des sections suivantes en référence à la figure 2. Le terminal démarre notamment un temporisateur T0. Puis, il tente de communiquer avec le réseau d'accès radio GSM 12 selon les nouveaux canaux indiqués dans la commande, en cessant d'émettre sur le canal dédié montant (cas de HHO).

Si, pour une raison quelconque, le terminal n'a pas réussi à poursuivre la communication sur les nouveaux canaux radio avec le réseau d'accès radio 12 à l'expiration du temporisateur T0, on est dans un cas d'échec du HHO. Alors, le terminal tente de revenir sur les canaux dédiés initiaux pour reprendre la communication. Il envoie aussi un message informant le réseau d'accès de l'échec du hard handover ("handover failure").

La puissance à laquelle le terminal recommence à émettre dans un mode de réalisation de la présente invention est calculée de telle sorte qu'elle soit adaptée aux nouvelles conditions dans lesquelles se trouve le terminal par rapport à la station de base initiale 5 après l'échec du HHO.

La figure 2 illustre différentes étapes permettant de déterminer cette nouvelle puissance d'émission.

Le terminal 10 en communication via un lien radio initial établi avec le réseau d'accès 11, reçoit le message de commande de HHO 13. A réception de ce message (étape 21), le terminal 10 active le temporisateur T0, dont la durée est typiquement de quelques centaines de millisecondes, et il mémorise des informations relative à la cellule initiale, parmi lesquelles:

- la puissance à laquelle il était en train d'émettre sur le canal dédié montant au moment de recevoir la commande 13. Cette puissance est asservie de façon connue par les boucles de contrôle de puissance mises en oeuvre dans le réseau UMTS;

- un premier niveau de puissance capté dans la cellule du réseau d'accès 11 desservie par la station de base 5. Ce niveau de puissance est typiquement mesuré sur le canal CPICH correspondant, mais il peut aussi l'être sur un autre canal commun ou un canal dédié;

- des informations de synchronisation de la communication avec la cellule initiale, par exemple sous la forme d'un décalage entre un compteur de trames tenu à jour dans le terminal et un compteur de trames de référence diffusé par la cellule.

Puis, le terminal cesse de transmettre sur le premier canal dédié montant et tente de poursuivre la communication avec le réseau d'accès 12 sur les nouveaux canaux désignés. Si le temporisateur T0 vient à expiration 23 sans que la communication ait pu reprendre sur ces nouveaux canaux, le HHO. est détecté comme ayant échoué. Le terminal revient alors sur les premiers canaux radio. Pour cela, il estime un second niveau de puissance capté depuis la cellule desservie par la station de base 5 (par exemple sur le CPICH), et il se synchronise à nouveau avec elle grâce aux informations de synchronisation mémorisées et au fait qu'il n'a pas cessé d'incrémenter régulièrement son compteur de trames.

A partir des informations préalablement mémorisées et de l'estimation (24) du second niveau de puissance, le terminal détermine (25) la puissance d'émission à laquelle il va recommencer à émettre sur le premier canal radio dédié monté.

Dans un mode de réalisation de la présente invention, le niveau de puissance capté depuis une cellule du réseau d'accès radio 11 correspond à la mesure précédemment définie et notée CPICH_RSCP. Ainsi, on note $CPICH\_RSCP_{avant}$, une mesure de la puissance du signal reçu sur le CPICH depuis la station de base 5 effectuée avant la tentative de HHO, et $CPICH\_RSCP_{après}$ une mesure de la puissance du signal reçu sur le CPICH depuis la station de base 5 effectuée après l'échec du HHO.

Dans ce cas, la puissance d'émission du terminal sur le canal dédié montant une fois que la tentative de handover a échoué, notée $P_{après}$, vérifie de préférence l'équation suivante :

$$P_{après} = P_{avant} - (CPICH\_RSCP_{après} - CPICH\_RSCP_{avant}) + D \qquad (1)$$

où Pavant est la puissance de référence mémorisée à laquelle le terminal émettait au moment de recevoir la commande de HHO, et D est un décalage de puissance prédéterminé. Le décalage D a une valeur positive pour réduire la probabilité de perte de communication. Cette valeur peut cependant être nulle. La valeur de D est soit définie une fois pour toutes dans le terminal, soit signalée à celui-ci par le réseau d'accès 11, par exemple dans des informations système diffusées sur l'interface radio, dans la signalisation d'établissement de la communication ou dans le message de commande de HHO. Elle peut être choisie par l'opérateur du réseau d'accès 11, soit de façon globale pour le réseau, soit de façon différenciée cellule par cellule. Cette valeur de D peut d'autre part varier dynamiquement selon divers critères, liés par exemple à l'état de charge du réseau.

Dans un autre mode de réalisation de la présente invention, le niveau de puissance capté dans la cellule correspond à une mesure d'énergie précédemment définie et notée $CPICH\_Ec/N_0$. Ainsi, on note $CPICH\_Ec/N_{0avant}$ une telle mesure d'énergie reçue depuis la station de base sur le canal CPICH avant le HHO, et on note $CPICH\_Ec/N_{0après}$ la même mesure d'énergie reçue depuis la station de base sur le canal CPICH après l'échec du HHO.

Dans ce cas, la puissance d'émission du terminal sur le premier canal radio dédié montant après l'échec du HHO vérifie de préférence l'équation suivante:

$$P_{après} = P_{avant} - (CPICH\_Ec/N_{0après} - CPICH\_Ec/N_{0avant}) + D \qquad (2)$$

On notera que les mesures $CPICH\_Ec/N_0$ sont faites sur des signaux descendants alors que les mesures qui seraient les plus pertinentes à prendre en compte dans le bilan de puissance devraient en toute rigueur être des mesures sur la voie montante puisque c'est la puissance d'émission sur des canaux montants qu'il s'agit ici de contrôler. Le terme de pathloss que représente CPICH_RSCP ramené à la puissance d'émission du node B sur le canal CPICH (laquelle puissance d'émission est connue du terminal et ne varie généralement pas dans le temps) ne présente généralement pas de différence très importante entre la voie montante et la voie descendante, mais il peut en être autrement du niveau de bruit généré par les interféreurs, la technologie d'accès étant de type CDMA. Néanmoins, la formule (2) procurera déjà un gain appréciable étant donné que la situation d'interférence sur la voie montante ne subit pas nécessairement une évolution importante pendant la durée du temporisateur T0.

Il est possible d'améliorer encore les performances en tenant compte, à la place des termes $N_{0avant}$ et $N_{0après}$, de mesures d'interférence sur la voie montante $I_{0avant}$ et $I_{0après}$ que la station de base 5 fournirait au terminal 10. Ces mesures d'interférence sont faites par le récepteur de la station de base. Elles peuvent être diffusées dans la cellule, par exemple dans des informations système, ce qui permet au terminal de les recevoir avant de tenter le HHO et après son échec et de les combiner aux mesures de puissance $CPICH\_RSCP_{avant}$ et $CPICH\_RSCP_{après}$ pour calculer sa nouvelle puissance d'émission selon:

$$P_{après} = P_{avant} - (CPICH\_RSCP_{après}/I_{0après} - CPICH\_RSCP_{avant}/I_{0avant}) + D \qquad (3)$$

La mesure d'interférence $I_{0avant}$ peut aussi être signalée au terminal dans le message de commande de handover.

Il est possible qu'un HHO soit requis alors que le terminal est en situation de SHO ou de SerHO. Dans le cas où le terminal est en SHO, plusieurs liens sont établis avec plusieurs stations de base différentes. Dans le cas où le terminal est en SerHO, plusieurs liens relevant de cellules différentes sont établis avec plusieurs stations de base.

Dans ce cas, avant de tenter un HHO, le terminal mémorise le premier niveau de puissance relativement à chaque cellule de l'ensemble actif avec laquelle il a un lien radio actif. Puis, une fois que la tentative de HHO a échoué, le terminal essaie à nouveau de mesurer les seconds niveaux de puissance pour les mêmes cellules. Ensuite, le terminal détermine une nouvelle puissance d'émission en fonction de la variation entre les premier et second niveaux de puissance ainsi déterminés.

Dans l'exemple suivant, le niveau de puissance capté depuis les stations de base correspond à la mesure d'énergie $CPICH\_Ec/N_0$ précédemment définie. Ainsi, à partir des mesures $CPICH\_Ec/N_0$ effectuées sur les différents CPICH correspondant aux cellules de l'ensemble actif, on fournit un niveau de puissance combiné, noté $CPICH\_Ec/N_{0combiné}$.

Une valeur du niveau de puissance combiné $CPICH\_Ec/N_{0combiné}$ avant le HHO et après le HHO est détaillée ci-après en fonction de différents scénarios.

Dans le cas où le terminal est en SHO (mais non en SerHO), lorsqu'il reçoit une commande de HHO, il détermine une valeur $CPICH\_Ec/N_{0combiné}$ en tenant compte de préférence des niveaux de puissance captés depuis un nombre p de cellules de l'ensemble actif (relevant de stations de base toutes différentes). Ainsi, une valeur $CPICH\_Ec/N_{0combiné}$ peut avantageusement vérifier:

$$CPICH\_Ec/N_{0combiné} = Max(CPICH\_Ec/N_{01}, ..., CPICH\_Ec/N_{0p}) \qquad (4)$$

où $CPICH\_Ec/N_{01}$ à $CPICH\_Ec/N_{0p}$ correspondent respectivement aux niveaux de puissance captés depuis les p stations de base.

Dans le cas où le terminal est en SerHO avec r > 1 cellules gérées par une seule station de base, il peut estimer la valeur $CPICH\_Ec/N_{0combiné}$ à réception d'une commande de HHO selon:

$$CPICH\_Ec/N_{0combiné} = \sum_{i=1}^{r} CPICH\_Ec/N_{0i} \qquad (5)$$

où $CPICH\_Ec/N_{0i}$ correspond à un niveau de puissance capté depuis la station de base comprenant r liens radio avec le terminal pour un softer handover.

Dans le cas où le terminal est en SHO avec p > 1 stations de base dont l'une au moins gère plusieurs cellules de l'ensemble actif avec lesquelles le terminal est en SerHO, la valeur $CPICH\_Ec/N_{0combiné}$ peut être déterminée selon (4), le terme $CPICH\_Ec/N_{0k}$ pour chaque station de base k gérant plusieurs cellules de l'ensemble actif étant préalablement obtenu selon une somme de la forme (5).

Dans un mode de réalisation de la présente invention, une telle combinaison est réalisée une première fois sur réception de la commande de HHO et fournit un premier niveau de puissance capté, noté $CPICH\_Ec/N_{0combiné-avant}$, puis une seconde fois après l'échec du HHO et fournit un second niveau de puissance capté, noté $CPICH\_Ec/N_{0combiné-après}$.

Ainsi, le terminal peut déterminer la puissance d'émission sur le premier canal radio dédié montant après l'échec du HHO selon:

$$P_{après} = P_{avant} - (CPICH\_Ec/N_{0\ combiné-après} - CPICH\_Ec/N_{0\ combiné-avant}) + D \qquad (6)$$

On note qu'il est avantageux de déterminer rapidement la nouvelle puissance d'émission après l'échec du HHO. A cet effet, lors que la valeur $CPICH\_Ec/N_{0combiné-après}$ est déterminée, le terminal peut prendre en compte uniquement les niveaux de puissance qu'il est capable de capter rapidement. Ainsi, de préférence, le terminal combine des niveaux de puissance captés depuis des cellules avec lesquelles il peut se re-synchroniser rapidement après l'échec du HHO.

Dans une autre réalisation, lorsque le terminal est en SHO lorsqu'il reçoit la commande de HHO, il peut tenter d'émettre à une puissance adaptée à au moins une des cellules de l'ensemble actif.

A cet effet, on définit une variation $\Delta_i$ de niveau de puissance capté depuis une cellule i de l'ensemble actif avant et après le HHO. Dans le cas décrit ci-après, le niveau de puissance capté correspond à une puissance de réception d'un signal sur le canal CPICH, et vérifie:

$$\Delta_i = CPICH\_RSCP_{avant}(i) - CPICH\_RSCP_{après}(i) \qquad (7)$$

où $CPICH\_RSCP_{avant}(i)$ est la mesure RSCP sur le canal CPICH relatif à la cellule i avant le HHO et où $CPICH\_RSCP_{après}(i)$ est la mesure RSCP sur ce même canal CPICH après l'échec du HHO. On note $\Delta_{i\text{-positif}}$ les variations $\Delta_i$ qui sont positives et $\Delta_{i\text{-négatif}}$ les variations $\Delta_i$ qui sont négatives.

Dans le cas où au moins un $\Delta_i$ est positif, le terminal peut calculer sa puissance d'émission après l'échec du HHO selon:

$$P_{après} = P_{initial} - Max(\Delta_{i\text{-positif}}) + D \qquad (8)$$

Dans le cas où aucun des $\Delta_i$ n'est positif, le terminal calcule sa puissance d'émission après l'échec du HHO selon:

$$P_{après} = P_{initial} + Min(|\Delta_i|) + D \qquad (9)$$

Par conséquent, la puissance d'émission après l'échec du HHO est augmentée dans le cas où toutes les variations $\Delta_i$ sont négatives. Dans le cas où au moins une des variations $\Delta_i$ est positive, la puissance d'émission pourra diminuer par rapport à ce qu'elle était avant le HHO. On peut ainsi avantageusement réduire la puissance utilisée par le terminal sur le canal dédié montant vers le réseau d'accès.

Une variante de calcul de puissance d'émission est proposée ci-après dans le cas où le terminal est en SHO. Cette variante vise à adapter au mieux la puissance d'émission après l'échec du HHO sur tout ou partie des liens radio établis avec les cellules de l'ensemble actif. On calcule, comme dans la méthode décrite ci-dessus, les $\Delta_i$ relativement aux différentes cellules de l'ensemble actif. Dans le cas où au moins un $\Delta_i$ est négatif, on peut calculer la puissance d'émission après l'échec du HHO selon:

$$P_{après} = P_{avant} + Max(|\Delta_{i\text{-négatif}}|) + D \qquad (10)$$

Dans le cas contraire, le terminal détermine la puissance d'émission selon:

$$P_{après} = P_{avant} - Min(|\Delta_{i\text{-négatif}}|) + D \qquad (11)$$

Par conséquent, la puissance est augmentée dès lors qu'au moins un des $\Delta_i$ est négatif. La puissance ne peut être diminuée que si tous les $\Delta_i$ sont positifs.

Préférablement, le terminal détermine rapidement la nouvelle puissance d'émission A cet effet, il est avantageux que la valeur $CPICH\_RSCP_{après}$ ne soit déterminée que relativement aux stations de base avec lesquelles le terminal se re-synchronise rapidement après l'échec du handover.

Un tel procédé peut aisément être mis en oeuvre dans un système cellulaire déjà existant afin de fournir une meilleure qualité de gestion de la mobilité des terminaux.

**Revendications**

1. Procédé de contrôle de la puissance d'émission d'un terminal mobile (10) en communication dans un système radio cellulaire, le terminal (10) recevant des commandes d'asservissement de puissance depuis au moins une station de base du système cellulaire avec laquelle est établi un lien radio (8) comprenant des premiers canaux dédiés montant et descendant, le procédé comprenant les étapes suivantes :

   - en réponse à la réception par le terminal d'une commande de changement de canaux (13), mémoriser (21) un premier niveau de puissance capté depuis ladite station de base et une puissance de référence à laquelle le terminal émettait sur le premier canal montant au moment de recevoir ladite commande, et tenter (22) de poursuivre la communication sur de nouveaux canaux dédiés montant et descendant, le terminal cessant d'émettre sur le premier canal dédié montant;
   - si la poursuite de la communication sur les nouveaux canaux échoue (23), estimer (24) un second niveau de puissance capté depuis ladite station de base, et recommencer à émettre (26) depuis le terminal (10) sur le premier canal dédié montant avec un niveau de puissance déterminé (25) en fonction de la puissance de référence mémorisée et d'une variation observée entre lesdits premier et second niveaux de puissance

2. Procédé selon la revendication 1, suivant lequel le terminal mobile (10) détermine le premier et/ou le second niveau de puissance capté depuis la station de base à partir d'une puissance de réception d'un signal émis par la station de base sur un canal commun descendant

3. Procédé selon la revendication 1 ou 2, suivant lequel le terminal mobile détermine le premier et/ou le second niveau de puissance capté depuis la station de base en calculant une énergie reçue pendant une période de temps donnée depuis la station de base dans une bande de fréquence définie sur un canal commun descendant.

4. Procédé selon l'une quelconque des revendications précédentes, suivant lequel, plusieurs liens radio relevant de cellules différentes étant établis entre le terminal mobile et une ou plusieurs stations de base au moment de la réception de la commande de changement de canaux, le terminal détermine le premier niveau de puissance par une combinaison de certains au moins des niveaux de puissance captés depuis lesdites stations de base relativement auxdites cellules, et suivant lequel, si la poursuite de la communication sur les nouveaux canaux échoue, le terminal estime le second niveau de puissance en combinant certains au moins des niveaux de puissance captés depuis lesdites stations de base relativement auxdites cellules.

5. Procédé selon l'une quelconque des revendications précédentes, suivant lequel le terminal mémorise en outre des informations relatives à une synchronisation avec la station de base avant de tenter de poursuivre la communication sur les nouveaux canaux dédiés, et suivant lequel, une fois que la poursuite de la communication sur les nouveaux canaux a échoué, le terminal se synchronise avec la station de base à partir desdites informations de synchronisation mémorisées pour estimer le second niveau de puissance.

6. Procédé selon l'une quelconque des revendications précédentes, suivant lequel le terminal mobile détermine le niveau de puissance d'émission, une fois que la poursuite de la communication sur les nouveaux canaux a échoué, comme une différence entre la puissance de référence mémorisée et la variation observée entre les premier et second niveaux de puissance, augmentée d'une valeur de décalage de puissance positive ou nulle.

7. Procédé selon la revendication 6, suivant lequel le terminal détermine la valeur de décalage de puissance en fonction d'informations reçues depuis la station de base.

8. Procédé selon l'une quelconque des revendications précédentes, suivant lequel le terminal active un temporisateur avant de tenter de poursuivre la communication sur les nouveaux canaux, et suivant lequel la poursuite de la communication échoue si, à l'expiration dudit temporisateur (23), le terminal n'a pas pu communiquer sur les nouveaux canaux

9. Dispositif de contrôle de puissance d'émission d'un terminal mobile (10) comprenant des moyens de traitement agencés pour la mise en oeuvre d'un procédé selon l'une quelconque des revendications 1 à 8.

10. Terminal mobile de radiocommunication (10), comprenant:

   - des moyens de communication avec au moins une station de base d'un système radio cellulaire selon un lien radio comprenant des premiers canaux dédiés montant et descendant, les moyens de communication comprenant des moyens d'asservissement de la puissance d'émission sur le premier canal dédié montant en fonction de commandes d'asservissement de puissance reçues depuis ladite station de base;

- des moyens pour, en réponse à la réception par le terminal d'une commande de changement de canaux, mémoriser un premier niveau de puissance capté depuis ladite station de base et une puissance de référence à laquelle le terminal émettait sur le premier canal montant au moment de recevoir ladite commande et tenter de poursuivre la communication sur de nouveaux canaux dédiés montant et descendant, le terminal cessant d'émettre sur le premier canal dédié montant;

- des moyens pour, en cas d'échec de la poursuite de la communication sur les nouveaux canaux, estimer un second niveau de puissance capté depuis ladite station de base, et recommencer à émettre sur le premier canal dédié montant avec un niveau de puissance déterminé en fonction de la puissance de référence mémorisée et d'une variation observée entre lesdits premier et second niveaux de puissance.

**11.** Terminal mobile selon la revendication 10, comprenant en outre des moyens pour déterminer le premier et/ou le second niveau de puissance capté depuis la station de base à partir d'une puissance de réception d'un signal émis par la station de base sur un canal commun descendant.

**12.** Terminal mobile selon la revendication 10 ou 11, comprenant en outre:

- des moyens pour déterminer le premier niveau de puissance par une combinaison de certains au moins des niveaux de puissance captés depuis lesdites stations de base, plusieurs liens radio étant établis entre le terminal mobile et une ou plusieurs stations de base ; et

- des moyens pour estimer, si la poursuite de la communication sur les nouveaux canaux échoue, le second niveau de puissance en combinant certains au moins des niveaux de puissance captés depuis lesdites stations de base

**13.** Terminal mobile selon l'une quelconque des revendications 10 à 12, comprenant en outre des moyens pour déterminer le niveau de puissance d'émission, une fois que la poursuite de la communication sur les nouveaux canaux a échoué, comme une différence entre la puissance de référence mémorisée et la variation observée entre les premier et second niveaux de puissance, augmentée d'une valeur de décalage de puissance positive ou nulle.

**Claims**

**1.** Method of controlling the transmission power of a mobile terminal (10) in communication in a cellular radio system, the terminal (10) receiving power control commands from at least one base station of the cellar system with which a radio link (8) comprising first dedicated uplink and downlink channels is set up, the method comprising the Mowing steps :

- in response to the reception by the terminal of a command to change channels (13), storing (21) a first power level captured from said base station and a reference power with which the terminal was transmitting on the first uplink channel at the time of receiving said command and attempting (22) to continue the call on new dedicated uplink and downlink channels, the terminal ceasing to transmit on the first dedicated uplink channel;

- if the continuation of the call on the new channels fails (23), estimating (24) a second power level captured from said base station and resuming transmission (26) from the terminal (10) on the first dedicated uplink channel with a power level determined (25) as a function of the stored reference power and an observed variation between said first and second power levels.

**2.** Method according to claim 1, wherein the mobile terminal (10) determines the first and/or the second power level captured from the base station from a reception power of a signal transmitted by the base station on a common downlink channel.

**3.** Method according to claim 1 or 2, wherein the mobile terminal determines the first and/or the second power level captured from the base station by calculating an energy received during a given time period from the base station in a defined frequency band on a common downlink channel.

**4.** Method according to any one of the preceding claims, wherein, a plurality of radio links of different cells being established between the mobile terminal and one or more base stations at the time of reception of the command to change channels, the terminal determines the first power level by combining at least some of the power levels captured from said base stations in relation to said cells and wherein, if the continuation of the call on the new channels fails, the terminal estimates the second power level by combining at least some of the power levels captured from said base stations in relation to said cells.

5. Method according to any one of the preceding claims, wherein the terminal further stores information relating to synchronisation with the base station before attempting to continue the call on the new dedicated channels and wherein, once the continuation of the call on the new channels has failed, the terminal gets synchronised with the base station on the basis of said stored synchronisation information in order to estimate the second power level.

6. Method according to any one of the preceding claims, wherein the mobile terminal determines the transmission power level, once the continuation of the call on the new channels has failed, as a difference between the stored reference power and the observed variation between the first and second power levels, increased by a positive or zero power offset value.

7. Method according to claim 6, wherein the terminal determines the power offset value as a function of information received from the base station.

8. Method according to any one of the preceding claims, wherein the terminal activates a timer before attempting to continue the call on the new channels and wherein the continuation of the call fails if, on the expiry (23) of said timer, the terminal has not been able to communicate on the new channels.

9. Device for controlling the transmission power of a mobile terminal (10) comprising processor means adapted to implement a method according to any one of claims 1 to 8.

10. Mobile radio communication terminal (10), comprising:

means for communicating with at least one base station of a cellular radio system on a radio link comprising first dedicated uplink and downlink channels, the communication means comprising means for controlling the transmission power on the first dedicated uplink channel as a function of power control commands received from said base station;
- means for storing, in response to the terminal receiving a command to change channels, a first power level captured from said base station and a reference power with which the terminal was transmitting on the first uplink channel at the time of receiving said command and attempting to continue the call on new dedicated uplink and downlink channels, the terminal ceasing to transmit on the first dedicated uplink channel;
- means for estimating, if the continuation of the call on the new channels fails, a second power level captured from said base station and resuming sending on the first dedicated uplink channel with a power level determined as a function of the stored reference power and an observed variation between said first and second power levels.

11. Mobile terminal according to claim 10, further comprising means for determining the first and/or the second power level captured from the base station from a reception power of a signal transmitted by the base station on a common downlink channel.

12. Mobile terminal according to claim 10 or 11, further comprising:

- means for determining the first power level by combining at least some of the power levels captured from said base stations, a plurality of radio links being set up between the mobile terminal and one or more base stations; and
- means for estimating the second power level, if the continuation of the call on the new channels fails, by combining at least some of the power levels captured from said base stations.

13. Mobile terminal according to any one of claims 10 to 12, further comprising means for determining the transmission power level, once the continuation of the call on the new channels has failed, as a deference between the stored reference power and the observed variation between the first and second power levels, increased by a positive or zero power offset value.

**Patentansprüche**

1. Verfahren zur Steuerung der Sendeleistung eines mobilen Endgeräts (10) bei Verbindungen in einem zellularen Funksystem, wobei das Endgerät (10) Befehle zur Steuerung der Leistung von mindestens einer Basisstation des zellularen Systems erhält, mit der eine Funkverbindung (8) hergestellt wurde, die erste dedizierte, aufsteigende und absteigende Kanäle umfasst, wobei das Verfahren die folgenden Schritte umfasst :

   - als Reaktion auf den Empfang eines Befehls zum Kanalwechsel (13) durch das Endgerät, Speicherung (21) eines ersten von der genannten Basisstation erfassten Leistungspegels und einer Referenzleistung, mit der das Endgerät zum Zeitpunkt des Empfangs des genannten Befehls auf dem ersten aufsteigenden Kanal gesendet hat, und Versuch (22), die Verbindung über neue dedizierte, aufsteigende und absteigende Kanäle aufrecht zu erhalten, wobei das Endgerät nicht mehr auf dem ersten dedizierten, aufsteigenden Kanal sendet;
   - wenn die Aufrechterhaltung der Verbindung über die neuen Kanäle fehlschlägt (23), Schätzung (24) eines zweiten, von der genannten Basisstation erfassten Leistungspegels und erneuter Sendebeginn (26) durch das Endgerät (10) auf dem ersten dedizierten, aufsteigenden Kanal mit einem festgelegten Leistungspegel (25) in Abhängigkeit von der gespeicherten Referenzleistung und einer Abweichung, die zwischen dem genannten ersten und zweiten Leistungspegel beobachtet wurde.

2. Verfahren gemäß Anspruch 1, dem zufolge das mobile Endgerät (10) den ersten und/oder den zweiten von der Basisstation erfassten Leistungspegel ausgehend von der Empfangsleistung eines Signals festlegt, das von der Basisstation auf einem gemeinsamen, absteigenden Kanal gesendet wird.

3. Verfahren gemäß Anspruch 1 oder 2, dem zufolge das mobile Endgerät den ersten und/oder zweiten von der Basisstation erfassten Leistungspegel festlegt, indem es eine über einen gegebenen Zeitraum von der Basisstation in einem definierten Frequenzband auf einem gemeinsamen, absteigenden Kanal empfangene Energie berechnet.

4. Verfahren gemäß einem der vorgenannten Ansprüche, dem zufolge das Endgerät, da zum Empfangszeitpunkt des Befehls zum Kanalwechsel mehrere Funkverbindungen mit verschiedenen Zellen zwischen dem mobilen Endgerät und einer oder mehreren Basisstationen hergestellt wurden, den ersten Leistungspegel anhand einer Kombination aus zumindest einigen der von den genannten Basisstationen in Bezug auf die genannten Zellen erfassten Leistungspegeln festlegt, und dem zufolge das Endgerät, wenn die Verbindung über die neuen Kanäle fehlschlägt, den zweiten Leistungspegel schätzt, indem es mindestens die von den genannten Basisstationen in Bezug auf die genannten Zellen erfassten Leistungspegel kombiniert.

5. Verfahren gemäß einem der vorgenannten Ansprüche, dem zufolge das Endgerät außerdem Informationen in Bezug auf eine Synchronisierung mit der Basisstation speichert, ehe es versucht, die Verbindung über die neuen, dedizierten Kanäle fortzusetzen, und dem zufolge sich das Endgerät, sobald die Fortsetzung der Verbindung über die neuen Kanäle fehlgeschlagen ist, auf der Grundlage der genannten, gespeicherten Synchronisierungsinformat ionen mit der Basisstation synchronisiert, um den zweiten Leistungspegel zu schätzen.

6. Verfahren gemäß einem der vorgenannten Ansprüche, dem zufolge das mobile Endgerät den Sendeleistungspegel, sobald die Fortsetzung der Verbindung über die neuen Kanäle fehlgeschlagen ist, als Differenz zwischen der gespeicherten Referensleistung und der beobachteten Abweichung zwischen dem ersten und dem zweiten Leistungspegel, zuzüglich eines Werts für die Leistungsverschiebung, der positiv oder gleich Null ist, festlegt.

7. Verfahren gemäß Anspruch 6, dem zufolge das Endgerät den Wert für die Leistungsverschiebung in Abhängigkeit von den von der Basisstation empfangenen Informationen festlegt.

8. Verfahren gemäß einem der vorgenannten Ansprüche, dem zufolge das Endgerät einen Zeitzähler aktiviert, ehe es versucht, die Verbindung über die neuen Kanäle fortzusetzen, und dem zufolge die Fortsetzung der Verbindung fehlschlägt, wenn das Endgerät nach Ablauf des genannten Zeitzählers (23) keine Verbindung über die neuen Kanäle herstellen konnte.

9. Vorrichtung zur Steuerung der Sendeleistung eines mobilen Endgeräts (10), die Verarbeitungsmittel zur Ausführung eines Verfahrens gemäß einem der Ansprüche 1 bis 8 umfasst,

10. Mobiles Endgerät zur Funkkommunikation (10), das Folgendes umfasst :

- Mittel zur Kommunikation mit mindestens einer Basisstation eines zellularen Funksystems über eine Funkverbindung, die erste dedizierte, aufsteigende und absteigende Kanäle umfasst, wobei die Kommunikationsmittel Mittel zur Steuerung der Sendeleistung über den ersten dedizierten, aufsteigenden Kanal in Abhängigkeit von Befehlen zur Leistungssteuerung umfassen, die von der genannten Basisstation empfangen werden;

- Mittel zur Speicherung eines ersten, von der Basisstation erfassten Leistungspegels sowie einer Referenzleistung, mit der das Endgerät zum Zeitpunkt des Empfangs des genannten Befehls über den ersten aufsteigenden Kanal gesendet hat, als Reaktion auf den Empfang eines Befehls zum Kanalwechsel im Endgerät, und Versuch zur Fortsetzung der Verbindung über neue, dedizierte, aufsteigende und absteigende Kanäle, wobei das Endgerät nicht mehr über den ersten dedizierten, aufsteigenden Kanal sendet ;

- Mittel zur Schätzung eines zweiten, von der genannten Basisstation erfassten Leistungspegels im Fall einer fehlgeschlagenen Fortsetzung der Verbindung über die neuen Kanäle, und erneuter Sendebeginn über den ersten dedizierten, aufsteigenden Kanal mit einem Leistungspegel der in Abhängigkeit von der gespeicherten Referenzleistung und einer beobachteten Abweichung zwischen dem genannten ersten und zweiten Leistungspegel festgelegt wird.

11. Mobiles Endgerät gemäß Anspruch 10, das außerdem Mittel umfasst, um den ersten und/oder zweiten, von der Basisstation erfassten Leistungspegel ausgehend von der Empfangsleistung eines Signals festzulegen, das von der Basisstation auf einem gemeinsamen, absteigenden Kanal gesendet wird

12. Mobiles Endgerät gemäß Anspruch 10 oder 11, das außerdem Folgendes umfasst :

- Mittel zur Festlegung des ersten Leistungspegels durch die Kombination zumindest einiger Leistungspegel, die von den genannten Basisstationen erfasst wurden, wobei mehrere Funkverbindungen zwischen dem mobilen Endgerät und einer oder mehreren Basisstationen hergestellt werden; und

- Mittel zur Schätzung des ersten Leistungspegels, wenn die Fortsetzung der Verbindung über die neuen Kanäle fehlgeschlagen ist, durch Kombination zumindest bestimmter Leistungspegel, die von des genannten Basisstationen erfasst wurden.

13. Mobiles Endgerät gemäß einem der Ansprüche 10 bis 12, das außerdem Mittel zur Festlegung des Sendeleistungspegels umfasst, sobald die Fortsetzung der Verbindung über die neuen Kanäle fehlgeschlagen ist, und zwar als Differenz zwischen der gespeicherten Referenzleistung und der zwischen dem ersten und dem zweiten Leistungspegel 1 beobachteten Abweichung, zuzüglich eines Werts für die Leistungsverschiebung, der positiv oder gleich Null ist.

FIG.1.

FIG.2.

**EP 1 792 416 B1**

## RÉFÉRENCES CITÉES DANS LA DESCRIPTION

**Documents brevets cités dans la description**

- WO 03094541 A